# EUROPÄISCHE PATENTSCHRIFT

(11) **EP 1 734 629 B1**
(45) Veröffentlichungstag und Bekanntmachung des Hinweises auf die Patenterteilung: **21.10.2009**
(21) Anmeldenummer: 06115355.7
(22) Anmeldetag: 13.06.2006
(51) Int. Cl.: H02G 13/00

(54) **Halterung für einen Blitzableiter**
Holder for a lightning protector
Support pour un parafoudre

(30) Priorität: 18.06.2005 DE 202005009590 U
(43) Veröffentlichungstag der Anmeldung: 20.12.2006
(73) Patentinhaber: SETOLITE Lichttechnik GmbH, 42929 Wermelskirchen (DE)
(72) Erfinder: Schulte, Rolf, 42859 Remscheid (DE)
(74) Vertreter: von Kirschbaum, Alexander

(56) Entgegenhaltungen:
- EP-A- 0 736 651
- DE-U1- 8 319 425
- DE-U1-202004 003 233
- JP-A- 4 347 518
- JP-A- 2004 311 083
- US-A- 3 548 069
- US-A1- 2003 095 411

## Beschreibung

Die Erfindung betrifft einen Blitzableiter, der den Blitzstrom eines Blitzes ableitet, um Einrichtungen, wie beispielsweise Gebäude, Zelte und dgl., vor Blitzschlag zu schützen.

Bekannte Blitzableiter weisen in der Regel eine lange leitfähige Stange auf, welche die zu schützende Einrichtung überragt, damit bei einem Gewitter entstehende Blitze nicht in der Einrichtung, sondern in der Stange einschlagen. Hierzu ist die Stange in der Regel an einem möglichst hohen Punkt der Einrichtung mit der Einrichtung verbunden. Mit der Stange ist ein Leiter verbunden, der an einer von der Einrichtung entfernten Stelle geerdet ist, um den bei einem Blitzschlag entstehenden Blitzstrom abzuleiten.

Aus DE 20 2004 003 233 U1 ist es bekannt, einen derartigen Blitzableiter an dem Antennenmast einer zu schützenden Mobilfunkantenne zu befestigen.

Nachteilig bei einem derartigen Blitzableiter ist, dass zur ordnungsgemäßen Funktionsweise des Blitzableiters ein besonders hoch gelegenes, stabiles Bauteil erforderlich ist, um die Einrichtung von Blitzschlag schützen zu können. Die Auswahl eines geeigneten Standortes für den Blitzableiter ist daher stark eingeschränkt. Insbesondere wenn ein Blitzschutz mobiler Einrichtungen, wie beispielweise Zelte, beabsichtigt ist, kann ggf. nur unter Schwierigkeiten ein Teil des Zeltes als hinreichend stabile und zugängliche Befestigungsmöglichkeit für den Blitzableiter bereitgestellt werden.

Aus JP 04347518 ist ein teleskopierbarer Blitzableiter bekannt. Es handelt sich um einen stationären Blitzableiter.

Aufgabe der Ereindung ist es, einen Blitzableiter zu schaffen, dessen Einsetzbarkeit an unterschiedlichen Orten verbessert ist und insbesondere zum Blitzschutz von mobilen Einrichtungen geeignet ist.

Die Lösung der Aufgabe erfolgt erfindungsgemäß durch die Merkmale des Anspruchs 1.

Der erfindungsgemäße Blitzableiter zum Blitzschutz von insbesondere mobilen Einrichtungen weist einen Mast und mindestens einen mit dem Mast verbundene Leiter zur Ableitung eines Blitzstroms auf. Der abzuleitende Blitz kann hierbei von dem Leiter und/ oder einer mit dem Mast isolierend verbundenen Fangstange gefangen werden, wobei die Fangstange in diesem Fall mit dem Leiter elektrisch verbunden ist. Erfindungsgemäß ist der Mast zumindest teilweise teleskopierbar, so dass zumindest ein Teilbereich des Masts vorzugsweise stufenlos längenverstellbar ist.

Durch die Teleskopierbarkeit des Mastes kann ein von dem Blitzableiter bereitgestellter Schutzkegel, in dem Personen und Einrichtungen vor Blitzschlag geschützt sind, individuell an die lokalen Gegebenheiten angepasst werden, so dass insbesondere ein von dem Schutzkegel erfasster Blitzschutzbereich, in dem die zu schützenden Einrichtungen angeordnet sind, bedarfsgerecht eingestellt werden kann. Insbesondere kann der Mast des Blitzableiters im eingefahrenen Zustand so kurz ausgeführt sein, dass der Blitzableiter besonders einfach transportiert werden kann, wodurch eine mehrfache Wiederverwendung des Blitzableiters an unterschiedlichen Orten möglich ist. Auf Grund der leichten Transportierbarkeit des Blitzableiters eignet sich der Blitzableiter insbesondere zum Blitzschutz mobiler Einrichtungen, wie beispielweise Zelte, im freien abgestelltes Transportgut oder logistisch schwer erreichbaren Gerätschaften.

Erfindungsgemäß ist der Mast pneumatisch teleskopierbar. Dadurch ist es beispielsweise möglich, über einen Druckluftanschluss eine Druckluftleitung und/ oder eine Druckluftkartusche anzuschließen, wodurch der Mast schnell und einfach ausgefahren werden kann. Ferner kann der zum Teleskopieren des Mastes erforderliche pneumatische Druck von einer mit dem Mast verbundenen Luftpumpe bereitgestellt werden, die insbesondere von Hand oder mit Hilfe eines Fußes betätigt werden kann. Vorzugsweise weist der Mast ein Ventil auf, über das die zum Teleskopieren des Mastes erforderliche Luft abgelassen werden kann. Das Ventil kann ggf. auch zum Zuführen von Druckluft verwendet werden. Vorzugsweise kann das Ventil von Hand betätigt werden.

Um Unebenheiten des Untergrundes ausgleichen zu können, weist der Mast erfindungsgemäß höhenverstellbare bzw. längenverstellbare Nivellierelemente auf, mit deren Hilfe der Mast nivelliert werden kann, damit der Mast im Wesentlichen vertikal ausgerichtet ist.

Der teleskopierbare Mast des Blitzableiters weist vorzugsweise mehrere teleskopierbar miteiner verbundene Mastelemente auf. Hierbei sind die jeweils zueinander benachbarten Mastelemente, d.h. die im ausgefahrenen Zustand jeweils nachfolgenden Mastelemente, über ein Befestigungselement miteinander verbindbar und können beispielsweise miteinander arretiert und/ oder verrastet werden. Insbesondere weist das Befestigungselement ein federbelastetes Halteelement auf, um die Mastelemente automatisch zu verbinden, so dass eine beständige Arretierung der Mastelemente miteinander erreicht werden kann, die erst durch eine Bedienperson gelöst wird. Dadurch ist es beispielsweise möglich, durch Anlegen eines pneumatischen Drucks eine kraft bereitzustellen, die mit Hilfe eines einfachen Handgriffs das jeweils gelöste Mastelement von einer Eingezogen-Stellung zu einer Ausgefahren-Stellung zu bewegen.

Vorzugsweise kann der Mast zeitweilig mit einem Untergrund befestigt werden. Hierzu weist der Mast beispielsweise einen Fuß auf, der mit dem Untergrund verbunden werden kann. Der Fuß kann beispielsweise als Dreifuß ausgestaltet sein, der mit Hilfe von Ankerpfählen, wie sie beispielsweise für den Aufbau von Zelten verwendet werden, mit dem Untergrund befestigt werden kann.

Vorzugsweise sind mit dem Mast Mast-Distanzhalter verbunden, um den Leiter zum Mast beabstandet im Wesentlichen parallel zum Mast zu führen. Die Mast-Distanzhalter können zumindest zum Teil Ösen aufweisen, durch die der Leiter hindurchgeführt ist, wobei diese Mast-Distanzhalter vorzugsweise mit den Mastelementen verbunden sind. Ferner können Untergrund-Distanzhalter vorgesehen sein, die den Leiter zu dem Untergrund beabstandet führen. Dadurch kann der Leiter im Wesentlichen horizontal von dem Mast weggeführt werden. Vorzugsweise ist der Leiter an dem vom Mast wegweisenden Ende mit einem Tiefenerder verbunden, um den Blitzstrom in den Untergrund zu leiten. Der Leiter kann auch insbesondere bei einem harten Untergrund mit einem Strahlenerder verbunden sein, der in geringer Tiefe im Wesentlichen horizontal im Untergrund ausgerichtet ist.

Vorzugsweise werden mehrere erfindungsgemäße Blitzableiter zu einem Blitzschutzsystem zusammengefasst, bei dem die Blitzableiter derart angeordnet sind, dass die einzelnen Schutzbereiche der jeweiligen Blitzableiter einen gemeinsame zusammenhängenden Blitzschutzbereich ergeben. Dieser Blitzschutzbereich ist insbesondere so groß, dass in dem Blitzschutzbereich vor Blitzschlag geschützte Zelte angeordnet werden können. Der Blitzschutzbereich weist insbesondere eine Fläche von mindestens 11 m x 11 m, vorzugsweise von mindestens 20 m × 20 m und besonders bevorzugt von mindestens 25 m × 25 m auf. Vorzugsweise sind die Leitungen der einzelnen Blitzableiter derart geführt, dass sie von dem gemeinsam ausgebildeten Blitzschutzbereich, in dem die Zelte angeordnet werden können, wegführen.

Nachfolgend wird die Erfindung an Hand einer bevorzugten Ausführungsform unter Bezugnahme auf die anliegenden Zeichnungen näher erläutert.

### Es zeigen:

- Fig. 1: eine schematische Seitenansicht des erfindungsgemäßen Blitzableiters,
- Fig. 2: eine schematische Schnittansicht eines teleskopierbaren Mastes des Blitzableiters aus Fig. 1 und
- Fig. 3: eine schematische Draufsicht eines erfindungsgemäßen Blitzschutzsystems.

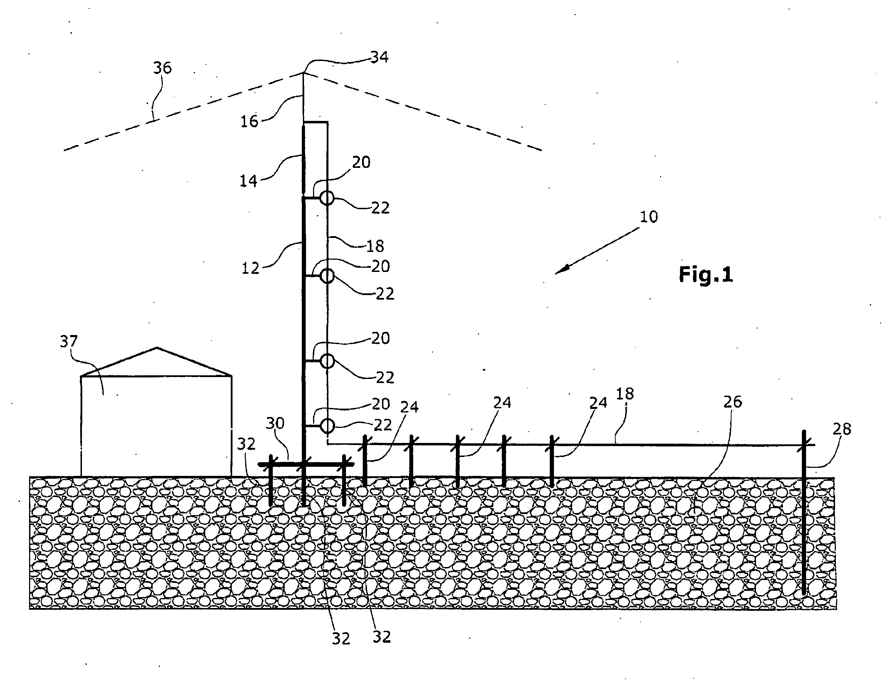

Der in Fig. 1 dargestellte Blitzableiter 10 weist einen Mast 12 auf, mit dem über ein ca. 1,5 m langes Isolatorelement 14 eine ca. 2 m lange Fangstange 16 aus Aluminium zum Fangen eines Blitzes verbunden ist. Mit der Fangstange 16, die gegenüber dem ca. 6 m langen Mast 12 elektrisch isoliert ist, ist ein elektrischer Leiter 18 verbunden, der mit Hilfe von Mast-Distanzhaltern 20 parallele zu dem Mast 12 vertikal geführt ist. Hierzu ist der Leiter 18 durch Ösen 22 der Mast-Distanzhalter 20 geführt. Im unteren Bereich des Mastes 12 ist der Leiter 18 um ca. 90 ° umgelenkt, so dass er im Wesentlichen horizontal verläuft. Der Leiter 18 ist im horizontalen Bereich mit Hilfe von Untergrund-Distanzhaltern 24 zu einem Untergrund 26 beabstandet. In ca. 10 m Entfernung zu dem Mast 12 ist die Leitung 18 mit einem oder mehreren Tiefenerdern 28 verbunden, der ca. drei Meter in den Untergrund 26 hineinragt.

Die mit dem Mast 12 verbundenen Mast-Distanzhalter 20 können auch als Kabelbinder ausgestaltet sein, die auf Grund ihrer eigenen Steifigkeit den Leiter 18 in einer Entfernung von ca. einem Meter von dem Mast 12 beabstandet am Mast 12 führen.

Der Mast 12 ist ferner mit einem Dreifuß 30 verbunden, der über Ankerpfähle 32 mit dem Untergrund 26 zeitweilig fest verbunden ist.

Bei einem Gewitter wird ein Blitz bevorzugt in der Fangstange 16 des Blitzableiters 10 einschlagen, so dass der Blitzstrom über die Leitung 18 an den Untergrund 26 abgeleitet werden kann. Dadurch ergibt sich ein von einer Spitze 34 ausgehender Schutzkegel 36 des Blitzableiters 10, in dem vor Blitzen geschützte Einrichtungen, wie beispielsweise ein Zelt 37, angeordnet werden kann.

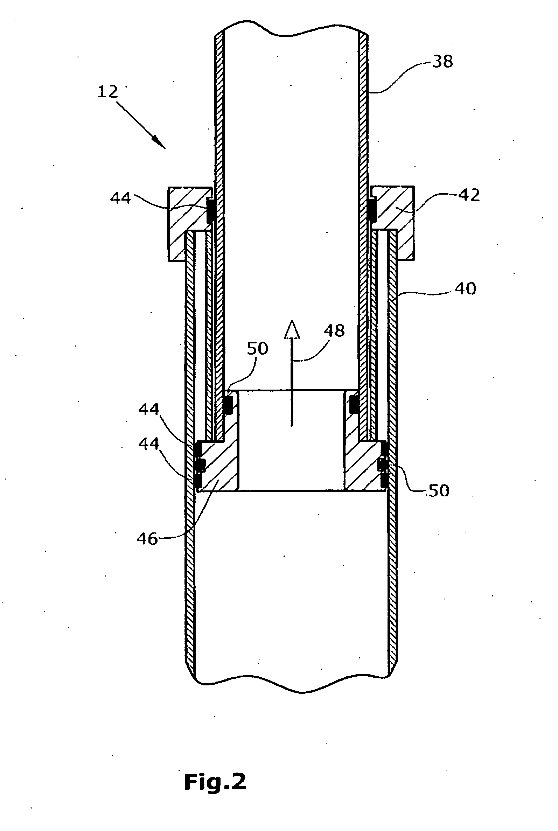

Der Mast 12 ist teleskopierbar ausgestaltet (Fig. 2) und weist ein erstes Mastelement 38 auf, das in einem zweiten Mastelement 40 geführt ist. Zur Führung des ersten Mastelementes 38 in dem zweiten Mastelement 40 ist das erste Mastelement 38 in einem oberen Bereich durch einen Führungsring 42 geführt, wobei der Kontakt des Führungsrings 42 mit dem ersten Mastelement 38 über einen Gleitring 44, der insbesondere aus Teflon besteht, erfolgt. Der Führungsring 42 ist mit dem zweiten Mastelement 40, beispielsweise durch Klemmen, fest verbunden und kann ein nicht dargeestelltes Befestigungselement zum Arretieren des ersten Mastelementes 38 mit dem zweiten Mastelement 40 aufweisen. Im unteren Bereich ist das erste Mastelement 38 über einen Kolben 46 in dem zweiten Mastelement 40 geführt, wobei der Kontakt des Kolbens 46 mit dem zweiten Mastelement 40 über Gleitringe 44 erfolgt.

Der teleskopierbare Mast 12 wird pneumatisch betätigt, in dem ein Luftdruck gegen den Kolben 46 und/ oder einen Verschluss des Mastes 12 im oberen Bereich drückt, wodurch das erste Mastelement 38 in Richtung eines Pfeils 48 aus dem zweiten Mastelement 40 herausgedrückt bzw. herausgezogen wird. Um ein Entweichen der Druckluft zu vermeiden, weist der Kolben 46 bei seinem Kontakt mit dem ersten Mastelement 38 und bei seinem Kontakt mit dem zweiten Mastelement 40 jeweils einen O-Ring 50 und/ oder eine vergleichbar wirkende Dichtung auf.

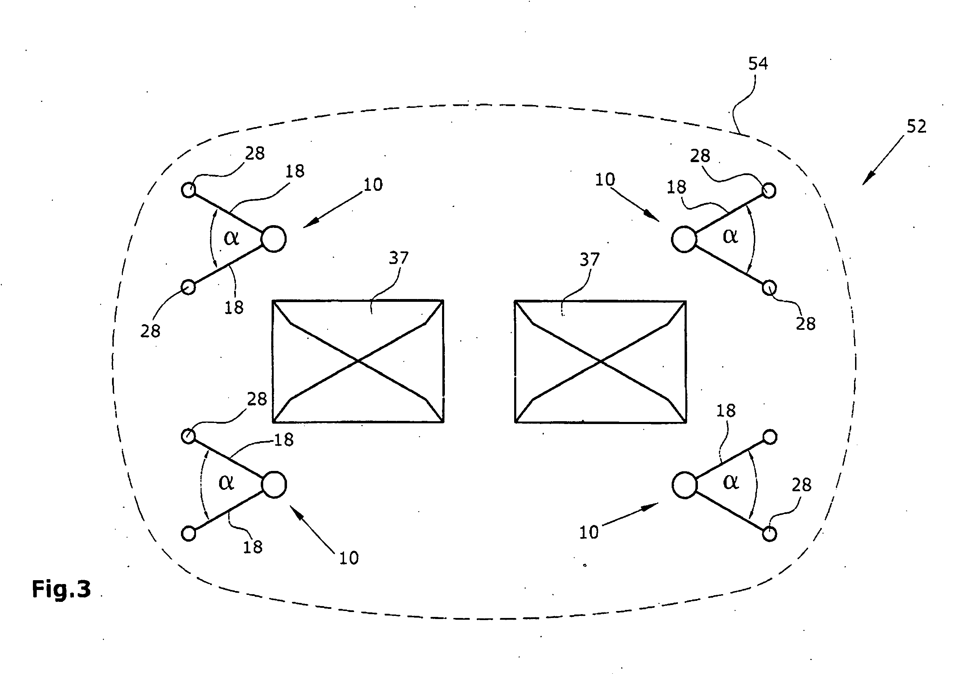

Bei dem in Fig. 3 dargestellten Ausführungsbeispiel des Blitzschutzsystems 52 sind vier vorzugsweise identisch ausgestaltete Blitzableiter 10 vorgesehen, deren Schutzkegel 36 einen gemeinsamen Blitzschutzbereich 54 ausbilden, in dem beispielsweise mehrere Zelte 37 angeordnet werden können. Die Blitzableiter 10 weisen jeweils zwei elektrische Leitungen 18 auf, die in einem Winkel von α = ca. 90 ° zueinander von den Zelten 37 und dem Blitzschutzbereich 54 wegführe. D. h., die im Blitzschutzbereich 54 angeordneten Leiter 18 weisen von einer Mitte des Blitzschutzbereichs 54 weg nach außen, wobei der Tiefenerder 28 je nach Länge der Leitungen 18 innerhalb oder außerhalb des Blitzschutzbereichs 54 angeordnet sein kann.

## Patentansprüche

1. Blitzableiter zum Blitzschutz von insbesondere mobilen Einrichtungen (37), mit
einem Mast (12) und
mindestens einem mit dem Mast (12) verbundenen Leiter (18) zur Ableitung eines Blitzstroms, wobei der Mast (12) zumindest teilweise teleskopierbar ist,
**dadurch gekennzeichnet,**
**dass** der Mast (12) pneumatisch teleskopierbar ist und
mit dem Mast (12) höhenverstellbare bzw. längenverstellbare Nivellierelemente zur Nivellierung des Mastes (12) verbunden sind.

2. Blitzableiter nach Anspruch 1, **dadurch gekennzeichnet, dass** der Mast (12) einen Druckluftanschluss zum Anschluss einer Druckluftleitung und/ oder einer Druckluftkartusche aufweist.

3. Blitzableiter nach Anspruch 1 oder 2, **dadurch gekennzeichnet, dass** mit dem Mast (12) eine insbesondere von Hand betätigbare Luftpumpe verbunden ist.

4. Blitzableiter nach einem der Ansprüche 1 - 3, **dadurch gekennzeichnet, dass** der Mast (12) ein insbesondere von Hand betätigbares Ventil zum Zuführen und/ oder Ablassen von Druckluft aufweist.

5. Blitzableiter nach einem der Ansprüche 1 - 4, **dadurch gekennzeichnet, dass** der Mast (12) mehrere teleskopierbar miteinander verbundene Mastelemente (38, 40) aufweist, wobei jeweils nachfolgende Mastelemente (38, 40) über ein Befestigungselement miteinander verbindbar sind.

6. Blitzableiter nach Anspruch 5, **dadurch gekennzeichnet, dass** das Befestigungselement ein federbelastetes Halteelement zur automatischen Verbindung der Mastelemente (38, 40) aufweist.

7. Blitzableiter nach einem der Ansprüche 1 - 6, **gekennzeichnet durch** einen mit dem Mast (12) befestigen Fuß (30) zur zeitweiligen Befestigung mit einem Untergrund (26).

8. Blitzableiter nach einem der Ansprüche 1 - 7, **gekennzeichnet durch** Mast-Distanzhalter (20) zur zum Mast (12) beabstandeten, im Wesentlichen zum Mast parallelen Führung des Leiters (18).

9. Blitzableiter nach Anspruch 5 und 8, **dadurch gekennzeichnet, dass** zumindest ein Teil der Mast-Distanzhalter (20) mit Mastelementen (38, 40) verbunden ist und diese Mast-Distanzhalter (20) jeweils eine Öse (22) zum Durchführen des Leiters (18) aufweisen.

10. Blitzableiter nach einem der Ansprüche 1 - 9, **gekennzeichnet durch** Untergrund-Distanzhalter (24) zur zu einem Untergrund (26) beabstandeten Führung des Leiters (18).

11. Blitzableiter nach einem der Ansprüche 1 - 10, **dadurch gekennzeichnet, dass** der Leiter (18) mit einem Tiefenerder (28) oder einem Strahlenerder zum Leiten des Blitzstroms in den Untergrund (26) verbunden ist.

12. Blitzableiter nach einem der Ansprüche 1 - 11, **gekennzeichnet durch** eine mit dem Mast (12) verbundene Fangstange (16) zum Fangen des Blitzes, die über ein Isolatorelement (14) zu dem Mast (12) elektrisch isoliert ist und die mit dem Leiter (18) elektrisch verbunden ist.

13. Blitzschutzsystem mit mehreren Blitzableitern (10) nach einem der Ansprüche 1 - 12, die derart angeordnet sind, dass sich ein Blitzschutzbereich (54) zur Anordnung von vor Blitzschlag geschützten Zelten (37) ergibt.

14. Blitzschutzsystem nach Anspruch 13, **dadurch gekennzeichnet, dass** der Blitzschutzbereich (54) eine Fläche von mindestens 11 m × 11 m, insbesondere von mindestens 20 m × 20 m und vorzugsweise von mindestens 25 m × 25 m aufweist.

15. Blitzschutzsystem nach Anspruch 13 oder 14, **dadurch gekennzeichnet, dass** die Leitungen (18) der Blitzableiter (10) von dem Blitzschutzbereich (54) wegführen.

## Claims

1. A lightning conductor for lightning protection of structures, particularly of mobile structures (37), comprising
a mast (12) and
at least one conductor (18) connected to the mast (12) for dissipating a lightning current, wherein the mast (12) is at least partially telescopable,
**characterized in that**
the mast (12) is pneumatically telescopable, and
the mast (12) has connected thereto height-variable or length-variable leveling means for leveling the mast (12).

2. The lightning conductor according to claim 1, wherein the mast (12) is provided with a pressurized air connector for connection of a pressurized air line and/or a pressurized cartridge.

3. The lightning conductor according to claim 1 or 2, wherein the mast (12) has connected thereto a pneumatic pump, particularly a manually operable pneumatic pump.

4. The lightning conductor according to one of claims 1-3, wherein the mast (12) is provided with a valve, particularly a manually operable valve, for supply and/or discharge of pressurized air.

5. The lightning conductor according to one of claims 1-4, wherein the mast (12) comprises a plurality of mast elements (38,40) connected to each other for telescoping movement relative to each other, respectively successive mast elements (38,40) being connectable to each other by a fastening element.

6. The lightning conductor according to claim 5, wherein the fastening element comprises a spring-biased holding element for automatic connection of the mast elements (38,40).

7. The lightning conductor according to one of claims 1-6, wherein the mast (12) has a foot member (30) attached thereto for temporary attachment of the mast (12) to the underlying ground (26).

8. The lightning conductor according to one of claims 1-7, wherein mast spacers (20) are provided to guide the conductor (18) at a distance from the mast (12) and substantially parallel to the mast.

9. The lightning conductor according to claims 5 and 8, wherein at least a part of the mast spacers (20) are connected to mast elements (38,40) and these mast spacers (20) are each provided with an eye (22) for passing the conductor (18) therethrough.

10. The lightning conductor according to one of claims 1-9, wherein bottom spacers (24) are provided for guiding the conductor (18) at a distance to an underlying ground (26).

11. The lightning conductor according to one of claims 1-10, wherein the conductor (18) is connected to a deep grounding means (28) or a star-type grounding means for dissipating the lightning current into the underlying ground (26).

12. The lightning conductor according to one of claims 1-11, wherein the mast (12) has a lightning rod (16) connected thereto for capturing the lightning, said lightning rod (16) being electrically insulated relative to the mast (12) by an insulating element (14) and being electrically connected to the conductor (18).

13. A lightning protection system comprising a plurality of lightning conductors (10) according to one of claims 1-12 arranged to form a lightning protection space (54) adapted to have tents (37) placed therein for protection from lightning.

14. The lightning protection system according to claim 13, wherein the lightning protection space (54) has a surface area of at least 11 m × 11 m, particularly at least 20 m × 20 m and preferably at least 25 m × 25 m.

15. The lightning protection system according to claim 13 or 14, wherein the conductors (18) of the lightening conductors (10) lead away from the lightning protection space (54).

## Revendications

1. Parafoudre pour la protection de structures (37), en particulier des structures mobiles, contre la foudre, comprenant
un mât (12) et
au moins un conducteur (18) relié au mât (12) pour décharger un courant de foudre, ledit mât (12) étant au moins partiellement escamotable,
**caractérisé en ce que**
ledit mât (12) est pneumatiquement escamotable, et
ledit mât (12) est connecté à des éléments de nivelage réglable en hauteur ou longueur pour le nivellement dudit mât (12).

2. Parafoudre selon la revendication 1, **caractérisé en ce que** ledit mât (12) comprend un raccord d'air comprimé pour le raccordement d'un conduit d'air comprimé et/ou d'une cartouche d'air comprimé.

3. Parafoudre selon la revendication 1 ou 2, **caractérisé en ce qu'**une pompe à air, en particulier manuelle, est raccordée au mât (12).

4. Parafoudre selon l'une quelconque des revendications 1 - 3, **caractérisé en ce que** ledit mât (12) comprend une soupape, en particulier manuelle, pour alimenter et/ou laisser échapper de l'air comprimé.

5. Parafoudre selon l'une quelconque des revendications 1 - 4, **caractérisé en ce que** ledit mât (12) comprend plusieurs éléments de mât (38, 40) connectés de manière escamotable, les éléments de mât successifs respectifs (38, 40) étant connectable entre eux par un élément d'assemblage.

6. Parafoudre selon la revendication 5, **caractérisé en ce que** ledit élément d'assemblage comprend un élément de retenue commandé par ressort pour l'assemblage automatique des éléments de mât (38, 40).

7. Parafoudre selon l'une quelconque des revendications 1 - 6, **caractérisé par** un pie (30) monté au mât (12) pour la montage temporaire sur un substrat (26).

8. Parafoudre selon l'une quelconque des revendications 1 - 7, **caractérisé par** des entretoises de mât (20) pour guider ledit conducteur (18) d'une manière écartée du mât et sensiblement en parallèle par rapport au mât (12).

9. Parafoudre selon les revendications 5 et 8, **caractérisé en ce qu'**au moins un part des entretoises de mât (20) sont montées à des éléments de mât (38, 40) et que ces entretoises de mât (20) chaque comprend une oeillet (22) pour y passer le conducteur (18).

10. Parafoudre selon l'une quelconque des revendications 1 - 9, **caractérisé par** des entretoises de substrat (24) pour guider le conducteur (18) écarté du substrat (26).

11. Parafoudre selon l'une quelconque des revendications 1 - 10, **caractérisé en ce que** le conducteur (18) est relié à une barre de mise à terre (28) ou un dispositif de mise à terre en étoile pour la conduction du courant de la foudre dans le substrat (26).

12. Parafoudre selon l'une quelconque des revendications 1 - 11, **caractérisé par** une pointe captrice (16) connectée au mât (12) pour capter la foudre, la pointe étant électriquement isolée du mât (12) par un élément isolateur (14) et électriquement connectée avec ledit conducteur (18).

13. Système de protection contre la foudre comprenant plusieurs parafoudres (10) selon l'une des revendications 1-12, disposés de sorte que l'on obtient une zone de protection contre la foudre (54) pour y placer des tentes (37) protégées contre des coups de foudre.

14. Système de protection contre la foudre selon la revendication 13, **caractérisé en ce que** la zone de protection contre la foudre (54) a une surface d'au moins 11 m × 11 m, en particulier au moins 20 m × 20 m, et de préférence au moins 25 m × 25 m.

15. Système de protection contre la foudre selon la revendication 13 ou 14, **caractérisé en ce que** les conducteurs (18) des parafoudres (10) sont guidés de manière qu'ils sont écartés de la zone de protection contre la foudre (54).
